# EUROPEAN PATENT APPLICATION

(11) **EP 4 761 074 A1**
(43) Veröffentlichungstag der Anmeldung: **17.06.2026**
(21) Anmeldenummer: 23948681.4
(22) Anmeldetag: 11.08.2023
(51) Int. Cl.: H02K 5/22

(54) **ANSCHLUSSKASTEN FÜR MOTOR UND MOTOR**

(71) Anmelder: Schaeffler Technologies AG & Co. KG, 91074 Herzogenaurach (DE)
(72) Erfinder: QIU, Huachao, Shanghai 201804 (CN)
(74) Vertreter: Schaeffler Technologies
(86) Internationale Anmeldenummer: PCT/CN2023/112439
(87) Internationale Veröffentlichungsnummer: WO 2025/035236

(57) **Zusammenfassung**

Bereitgestellt ist ein Verteilerkasten für einen Motor. Der Verteilerkasten (1) ist mit einer Entlüftungsöffnung (1h) versehen, die ein Verbinden des Inneren und Äußeren des Verteilerkastens (1) miteinander ermöglicht, und umfasst einen Kastenkörper (11) und eine Kastenabdeckung (12). Der Kastenkörper (11) ist an einem Gehäuse (2) des Motors befestigt und mit einer nach außen offenen Öffnung versehen und der Kastenkörper (11) ist mit einer Auffangrinne (1c) zum Auffangen von Kondenswasser versehen. Die Kastenabdeckung (12) ist an dem Kastenkörper (11) montiert und verschließt die Öffnung des Kastenkörpers (11), wobei die Kastenabdeckung (12) mit einem Strömungsleitweg versehen ist, wobei der Strömungsleitweg relativ zu der horizontalen Richtung schräg angeordnet ist und das untere Ende des Strömungsleitwegs derart mit der Öffnung der Auffangrinne (1c) in einer vertikalen Richtung ausgerichtet ist, dass das auf der Kastenabdeckung (12) kondensierte Kondenswasser durch den Strömungsleitweg geleitet werden kann und in die Auffangrinne (1c) fließt. Daher kann die Möglichkeit von elektrischen Ausfällen aufgrund des an dem Verteilerkasten kondensierten, auf ein Kabel tropfenden Kondenswassers stark reduziert oder sogar vermieden werden. Ebenfalls bereitgestellt ist der Motor, der den Verteilerkasten umfasst.

## Beschreibung

### Technisches Gebiet

Die vorliegende Anmeldung betrifft eine Konfiguration eines Verteilerkastens eines Motors, insbesondere einen Verteilerkasten für einen Motor und den Motor, der den Verteilerkasten umfasst.

### Hintergrund

Bei einem vollelektrischen Fahrzeug oder einem Hybridfahrzeug wird ein Motor im Allgemeinen als Stromquelle für den Antrieb des Fahrzeugs zum Fahren angewendet. Bei dem Motor kann eine Wicklung eines Stators über ein Kabel derart mit einer externen Stromversorgung verbunden werden, dass die externe Stromversorgung die Wicklung des Stators über das Kabel mit Strom versorgen kann.

Typischerweise ist außerhalb eines Gehäuses des Motors ein Verteilerkasten bereitgestellt und das Kabel durchdringt das Gehäuse, um sich zum Verbinden mit der externen Stromversorgung in den Verteilerkasten hinein und dann aus dem Verteilerkasten hinaus zu erstrecken. Ein Inneres des Verteilerkastens des Motors und ein Inneres des Gehäuses stehen miteinander in Verbindung. Zum Ausgleich des Luftdrucks zwischen der inneren und äußeren Umgebung des Motors ist der Verteilerkasten mit einer Entlüftungsöffnung versehen. Die Entlüftungsöffnung ermöglicht ein Durchtreten von Luft, kann aber ein Durchtreten einer Flüssigkeit oder eines Festkörpers verhindern. Durch eine Verwendung der Entlüftungsöffnung wird daher der Ausgleich des Luftdrucks zwischen der inneren und äußeren Umgebung des Motors erreicht und gleichzeitig die Funktion erreicht, das Eindringen anderer Fremdkörper dadurch zu verhindern.

Da die Luft jedoch eine gewisse Menge Dampf enthält, ist dieser Dampf stets im Inneren des Motors und im Inneren des Verteilerkastens vorhanden. Während des Betriebs des Motors erzeugt der Stator eine große Wärmemenge, und der Dampf konzentriert sich im Inneren des Verteilerkastens und kondensiert an dem Verteilerkasten (insbesondere an einer von dem Gehäuse des Motors abgewandten Kastenabdeckung). Das nach Kondensieren des Dampfes produzierte Kondenswasser kann auf das Kabel tropfen und dadurch zu elektrischen Ausfällen, wie Kurzschlüssen in dem Kabel, führen.

### Kurzdarstellung

Die vorliegende Anmeldung wird im Hinblick auf den vorstehend beschriebenen Stand der Technik bereitgestellt. Eine Aufgabe der vorliegenden Anmeldung ist das Bereitstellen eines Verteilerkastens für einen Motor, der die Möglichkeit von elektrischen Ausfällen aufgrund des an dem Verteilerkasten kondensierten, auf das Kabel tropfenden Kondenswassers stark reduziert oder sogar vermeidet. Eine andere Aufgabe der vorliegenden Anmeldung ist das Bereitstellen des Motors, der den vorstehenden Verteilerkasten umfasst.

Um die vorstehend erwähnte Aufgabe zu erfüllen, werden im Rahmen der vorliegenden Anmeldung die folgenden technischen Lösungen übernommen.

Die vorliegende Anmeldung stellte einen Verteilerkasten für einen Motor wie folgt bereit, der mit einer Entlüftungsöffnung versehen ist, die ein Verbinden eines Inneren und Äußeren des Verteilerkastens miteinander ermöglicht und wobei der Verteilerkasten Folgendes umfasst:
einen an einem Gehäuse des Motors befestigten und mit einer nach außen offenen Öffnung versehenen Kastenkörper und wobei der Kastenkörper mit einer Auffangrinne zum Auffangen von Kondenswasser versehen ist; und
eine an dem Kastenkörper montierte und die Öffnung des Kastenkörpers verschließende Kastenabdeckung, wobei die Kastenabdeckung mit einem Strömungsleitweg versehen ist, wobei der Strömungsleitweg relativ zu einer horizontalen Richtung schräg angeordnet ist und ein unteres Ende des Strömungsleitwegs derart mit einer Öffnung der Auffangrinne in einer vertikalen Richtung ausgerichtet ist, dass das auf der Kastenabdeckung kondensierte Kondenswasser durch den Strömungsleitweg geleitet werden kann und in die Auffangrinne fließt.

Bei einer optionalen Lösung ist die Kastenabdeckung mit einer Vielzahl von Rippen versehen, wobei sich die Vielzahl von Rippen im Inneren des Verteilerkastens befindet und jede Rippe den entsprechenden Strömungsleitweg derart definiert, dass das auf einer Fläche jeder Rippe kondensierte Kondenswasser durch die Rippe geleitet werden kann und in die Auffangrinne fließt.

Bei einer anderen optionalen Lösung erstreckt sich jede der Rippen linear und die Vielzahl von Rippen verläuft parallel zueinander und ein durch die Rippen und die horizontale Richtung ausgebildeter spitzer Winkel ist α, wobei α ≥ 10° gilt.

Bei einer anderen optionalen Lösung ist die Fläche jeder der Rippen mit einer Beschichtung versehen, die ein hydrophiles Material enthält.

Bei einer anderen optionalen Lösung ist der Kastenkörper mit einem Boden, einem ersten Seitenwandabschnitt und einem Trennwandabschnitt versehen, wobei der erste Seitenwandabschnitt von dem Boden absteht und zusammen mit dem Boden einen ersten Raum definiert und der Trennwandabschnitt von dem Boden absteht und den ersten Raum in die Auffangrinne und einen Kabelraum zum Aufbewahren eines Kabels unterteilt.

Bei einer anderen optionalen Lösung ist die Kastenabdeckung mit einem Oberteil und einem zweiten Seitenwandabschnitt versehen, wobei der zweite Seitenwandabschnitt von dem Oberteil absteht und zusammen mit dem Oberteil einen zweiten Raum definiert, wobei sich die Entlüftungsöffnung an dem Oberteil befindet und durch das Oberteil dringt und die Kastenabdeckung auf eine Weise an dem Kastenkörper montiert ist, dass der zweite Seitenwandabschnitt mit dem ersten Seitenwandabschnitt ausgerichtet ist.

Bei einer anderen optionalen Lösung ist eine in Richtung des zweiten Raums offene Öffnung der Entlüftungsöffnung derart mit der Öffnung der Auffangrinne ausgerichtet, dass nach dem Verdampfen des Kondenswassers in der Auffangrinne erzeugter Dampf mindestens teilweise über das Entlüftungsloch abgeführt werden kann.

Die vorliegende Anmeldung stellt ferner einen Motor wie folgt bereit, umfassend den Verteilerkasten für den Motor nach einer der vorstehenden technischen Lösungen.

Bei einer optionalen Lösung umfasst der Motor ein Gehäuse, wobei der Verteilerkasten für den Motor die Form eines Quaders oder Würfels aufweist und schräg über einer Seite des Gehäuses des Motors und in Umfangsrichtung des Motors bereitgestellt ist, wobei sich die Auffangrinne an einem unteren Ende des Verteilerkastens befindet.

Bei einer anderen optionalen Lösung umfasst der Motor ferner einen Stator, einen Rotor und ein Kabel, wobei der Verteilerkasten an dem Gehäuse befestigt ist, das Kabel mit einer Wicklung des Stators verbunden ist und das Gehäuse durchdringt, um sich in den Verteilerkasten hinein zu erstrecken, wobei ein Abschnitt des sich in den Verteilerkasten erstreckenden Kabels von der Auffangrinne getrennt ist,
das Gehäuse als Boden des Kastenkörpers dient, ein Inneres des Gehäuses mit einem Kühlkanal versehen ist, der ein Strömen eines Kühlfluids zum Kühlen des Stators ermöglicht und der Kühlkanal in einer radialen Richtung des Motors von der Auffangrinne versetzt angeordnet ist.

Durch die vorstehend genannten technischen Lösungen stellt die vorliegende Anmeldung einen neuartigen Verteilerkasten für einen Motor und den Motor, der den Verteilerkasten umfasst, bereit. Der Verteilerkasten ist mit einer Entlüftungsöffnung versehen, die ein Verbinden des Inneren und Äußeren des Verteilerkastens miteinander ermöglicht, und umfasst einen Kastenkörper und eine Kastenabdeckung, die zusammengebaut sind. Der Kastenkörper ist an dem Gehäuse des Motors befestigt und mit einer nach außen offenen Öffnung versehen und der Kastenkörper ist ferner mit einer Auffangrinne zum Auffangen von Kondenswasser versehen. Ferner ist die Kastenabdeckung an dem Kastenkörper montiert und verschließt die Öffnung des Kastenkörpers. Die Kastenabdeckung ist mit einem Strömungsleitweg versehen, wobei der Strömungsleitweg relativ zu einer horizontalen Richtung schräg angeordnet ist und ein unteres Ende des Strömungsleitwegs derart mit einer Öffnung der Auffangrinne in einer vertikalen Richtung ausgerichtet ist, dass das auf der Kastenabdeckung kondensierte Kondenswasser durch den Strömungsleitweg unter Einwirkung der Schwerkraft geleitet werden kann und in die Auffangrinne fließt.

Da der relativ zu der horizontalen Richtung geneigte Strömungsleitweg auf der Kastenabdeckung bereitgestellt ist, wo das Kondenswasser am wahrscheinlichsten erzeugt wird, kann auf diese Weise das meiste oder sogar das gesamte Kondenswasser unter Einwirkung der Schwerkraft über den Strömungsleitweg in die Auffangrinne geleitet werden. Daher kann die Möglichkeit von elektrischen Ausfällen aufgrund des an dem Verteilerkasten kondensierten, auf das Kabel tropfenden Kondenswassers stark reduziert oder sogar vermieden werden. Darüber hinaus erfordert der Verteilerkasten der vorliegenden Anmeldung keine wesentliche Änderung einer Konfiguration eines bestehenden Verteilerkastens und erreicht die vorstehend genannten Funktionen mit einer relativ einfachen konstruktiven Modifikation, wodurch die industrielle Produktion im Großmaßstab erleichtert wird.

### Kurzbeschreibung der Zeichnungen

FIG. 1 ist eine perspektivische schematische Ansicht, die einen Motor gemäß einer Ausführungsform der vorliegenden Anmeldung zeigt, wobei sich der Motor in einem Zustand befindet, in dem er nicht montiert ist;
FIG. 2 ist eine schematische Querschnittsansicht, die eine Teilkonstruktion des Motors in FIG. 1 zeigt, wobei sich der Motor in dem Zustand befindet, in dem er nicht montiert ist;
FIG. 3 ist eine schematische Querschnittsansicht, die eine Teilkonstruktion des Motors in FIG. 1 zeigt, wobei sich der Motor in dem Zustand befindet, in dem er montiert ist, und eine Strichpunktlinie in der Figur eine sich horizontal erstreckende gerade Linie darstellt; und
FIG. 4 ist eine perspektivische schematische Ansicht, die eine Kastenabdeckung eines Verteilerkastens des Motors aus FIG. 1 zeigt.

### Ausführliche Beschreibung

Im Folgenden werden spezifische Ausführungsformen der vorliegenden Anmeldung in Bezug auf die beigefügten Zeichnungen der Beschreibung ausführlich beschrieben. Es versteht sich, dass diese konkreten Beschreibungen Fachleute nur lehren sollen, wie die vorliegende Anmeldung zu realisieren ist, und weder alle möglichen Implementierungen der vorliegenden Anmeldung erschöpfend darlegen noch den Schutzumfang der vorliegenden Anmeldung einschränken sollen.

In der vorliegenden Anmeldung ist der Stator eines Motors einstückig in zylindrischer Form ausgebildet. Sofern nicht anders angegeben, bezeichnen die Begriffe "axial", "radial" und "Umfangs..." eine axiale Richtung, radiale Richtung bzw. Umfangsrichtung des Motors (Stators). "Radial außen" bezieht sich auf eine Seite, die in radialer Richtung von einer Mittelachse des Motors entfernt ist, und "radial innen" bezieht sich auf eine Seite, die in radialer Richtung nahe der Mittelachse des Motors liegt.

Der Motor und der in dem Motor beinhaltete Verteilerkasten gemäß einer Ausführungsform der vorliegenden Anmeldung sind nachstehend in Verbindung mit den beigefügten Zeichnungen der Beschreibung beschrieben.

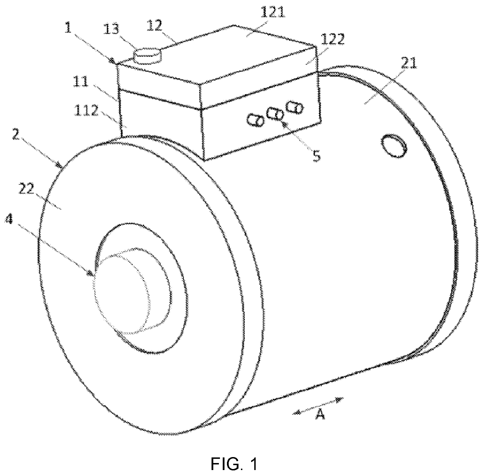

Wie in FIG. 1 bis FIG. 3 gezeigt, umfasst der Motor gemäß einer Ausführungsform der vorliegenden Anmeldung einen Verteilerkasten 1 für einen Motor, ein Gehäuse 2, einen Stator 3, einen Rotor 4, ein Kabel 5 und eine Isolierplatte 6 gemäß der vorliegenden Anmeldung. Der Stator 3 und der Rotor 4 befinden sich im Inneren des Gehäuses 2, der Verteilerkasten 1 ist an dem Gehäuse 2 befestigt und befindet sich außerhalb des Gehäuses 2, das Kabel 5 ist mit einer Wicklung 31 des Stators 3 verbunden und durchdringt das Gehäuse 2, um sich in den Verteilerkasten 1 hinein zu erstrecken, und die Isolierplatte 6 wird zum Trennen eines Abschnitts des Kabels 5, der sich in den Verteilerkasten 1 erstreckt, von dem Gehäuse 2 verwendet, um eine Isolierung zu erreichen.

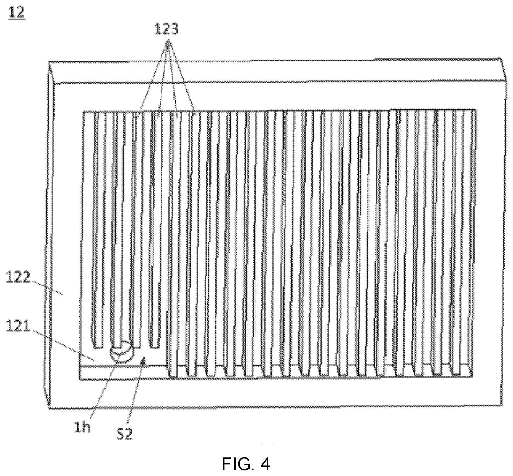

In dieser Ausführungsform umfasst der Verteilerkasten 1 für einen Motor, wie in FIG. 1 bis FIG. 3 gezeigt, insbesondere einen Kastenkörper 11, eine Kastenabdeckung 12 und ein Entlüftungsventil 13, die zusammengebaut sind. Der Kastenkörper 11 und das Gehäuse 2 sind aneinander montiert. Beispielsweise kann die Kastenabdeckung 12 durch Schrauben fest an dem Kastenkörper 11 montiert sein und das Entlüftungsventil 13 ist in eine Entlüftungsöffnung 1h eingesetzt (siehe FIG. 4), die auf der Kastenabdeckung 12 montiert ist.

Wie in FIG. 1 bis FIG. 3 gezeigt, ist der Kastenkörper 11 an dem Gehäuse 2 des Motors befestigt und mit einer nach außen offenen Öffnung versehen und der Kastenkörper 11 ist ferner mit einer Auffangrinne 1c zum Auffangen von Kondenswasser versehen. Insbesondere ist der Kastenkörper 11 mit einem Boden 111, einem ersten Seitenwandabschnitt 112 und einem Trennwandabschnitt 113 versehen, die zu einer Einheit ausgebildet sind. Der Kastenkörper 11 verwendet einen Gehäusekörper 21 des Gehäuses 2 als Boden 111.

Der erste Seitenwandabschnitt 112 steht von dem Boden 111 ab und der erste Seitenwandabschnitt 112 umfasst vier Seitenwände, die Ende an Ende auf eine Weise, dass sie rechtwinklig zueinander sind, derart verbunden sind, dass der erste Seitenwandabschnitt 112 und der Boden 111 eine konkave Form ausbilden und gemeinsam einen ersten Raum S1 definieren. Darüber hinaus steht der Trennwandabschnitt 113 ebenfalls von dem Boden 111 ab, der Trennwandabschnitt 113 befindet sich innerhalb des ersten Raums S1 und der Trennwandabschnitt 113 verläuft parallel zu einer Seitenwand des ersten Seitenwandabschnitts 112 und weist zwei Enden auf, die mit anderen zwei gegenüberliegenden Seitenwänden verbunden sind. Daher unterteilt der Trennwandabschnitt 113 den ersten Raum S1 in die Auffangrinne 1c und einen Kabelraum zum Aufbewahren des Kabels 5. In dieser Ausführungsform isoliert der Trennwandabschnitt 113 nicht vollständig die Auffangrinne 1c von dem Kabelraum und die zwei sind tatsächlich noch verbunden. Der Trennwandabschnitt 113 wird verwendet, um ein Eindringen des in der Auffangrinne 1c aufgefangenen Kondenswassers in den Kabelraum zu verhindern. Das heißt, der Trennwandabschnitt 113 trennt tatsächlich einen Abschnitt des Kabels 5, der sich in den Verteilerkasten 1 erstreckt, von dem Kondenswasser in der Auffangrinne 1c.

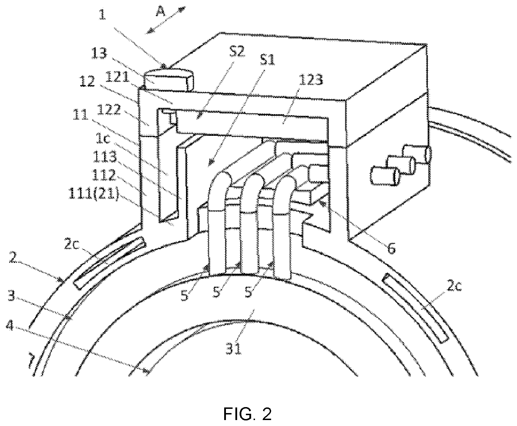

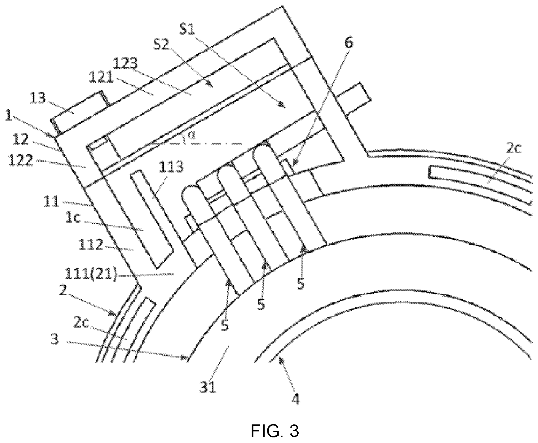

Wie in FIG. 1 bis FIG. 3 gezeigt, ist die Kastenabdeckung 12 an dem Kastenkörper 11 montiert und verschließt die Öffnung des Kastenkörpers 11 und das Oberteil 121 der Kastenabdeckung 12 ist mit einer Entlüftungsöffnung 1h versehen, um ein Verbinden eines Inneren und eines Äußeren des Verteilerkastens 1 miteinander zu ermöglichen. Insbesondere ist die Kastenabdeckung 12 mit einem Oberteil 121, einem zweiten Seitenwandabschnitt 122 und einer Vielzahl von Rippen 123 versehen. Das Oberteil 121 weist die Form einer flachen Platte auf. Wie in FIG. 4 gezeigt, steht der zweite Seitenwandabschnitt 122 von dem Oberteil 121 ab und der zweite Seitenwandabschnitt 122 umfasst vier Seitenwände, die Ende an Ende auf eine Weise, dass sie rechtwinklig zueinander sind, derart verbunden sind, dass der zweite Seitenwandabschnitt 122 und das Oberteil 121 eine konkave Form ausbilden und gemeinsam einen zweiten Raum S2 definieren. In dieser Ausführungsform ist die Kastenabdeckung 12, wie in FIG. 2 und FIG. 3 gezeigt, auf eine Weise an dem Kastenkörper 11 montiert, dass der zweite Seitenwandabschnitt 122 mit dem ersten Seitenwandabschnitt 112 derart ausgerichtet ist, dass die Kastenabdeckung 12 und der Kastenkörper 11 einen Innenraum des Verteilerkastens 1 auf eine geschlossene Weise ausbilden.

Ferner befindet sich die Vielzahl von Rippen 123, wie in FIG. 4 gezeigt, innerhalb des Verteilerkastens 1 und befindet sich innerhalb des zweiten Raums S2. Die Vielzahl von Rippen 123 erstreckt sich linear parallel zueinander und benachbarte Rippen 123 sind voneinander beabstandet. Eine Fläche jeder Rippe 123 ist mit einer Beschichtung versehen, die ein hydrophiles Material (z. B. Polyurethan usw.) enthält, das die Anhaftung von im Inneren des Verteilerkastens 1 konzentriertem Dampf an der Fläche der Rippe 123 zur Kondensation erleichtert. Durch Übernehmen der vorstehenden Konfiguration definiert jede Rippe 123 einen Strömungsleitweg zum Leiten des Kondenswassers derart, dass das auf der Fläche jeder Rippe 123 kondensierte Kondenswasser von der Rippe 123 ungefähr entlang einer Erstreckungsrichtung der Rippe 123 geleitet werden kann und in die Auffangrinne 1c fließt. Um nach der Montage des gesamten Motors ein reibungsloses Leiten des Kondenswassers durch den Strömungsleitweg in die Auffangrinne 1c unter Einwirkung der Schwerkraft zu ermöglichen, wie in FIG. 3 gezeigt, ist jede Rippe 123 schräg zu einer horizontalen Richtung angeordnet (d. h., der Strömungsleitweg ist schräg zu einer horizontalen Richtung angeordnet), ist jede Rippe 123 mit einem unteren Ende (umfassend einen Endabschnitt des untersten Endes der Rippe 123) versehen, das sich an einem tiefsten Punkt in einer vertikalen Richtung befindet, und sind die unteren Enden dieser Rippen 123 in der vertikalen Richtung derart mit der Öffnung der Auffangrinne 1c ausgerichtet, dass das auf der Kastenabdeckung 12 kondensierte Kondenswasser durch den Strömungsleitweg geleitet werden kann und in die Auffangrinne 1c fließt. Ferner ist, wie in FIG. 3 gezeigt, ein durch die Rippen 123 und die horizontale Richtung ausgebildeter spitzer Winkel auf α gesetzt. In dieser Ausführungsform α = 30°. Ferner befindet sich die Entlüftungsöffnung 1h, wie in FIG. 3 und FIG. 4 gezeigt, an einer Ecke des Oberteils 121 und durchdringt das Oberteil 121 und die Vielzahl von Rippen 123 ist derart konstruiert, dass sie einen Teil vermeiden, in dem sich die Entlüftungsöffnung 1h befindet. Nachdem der gesamte Motor montiert ist, ist eine in Richtung des zweiten Raums S2 offene Öffnung der Entlüftungsöffnung 1h derart mit der Öffnung der Auffangrinne 1c ausgerichtet, dass nach dem Verdampfen des Kondenswassers in der Auffangrinne 1c erzeugter Dampf mindestens teilweise über das Entlüftungsloch 1h abgeführt werden kann, wodurch die Feuchtigkeit im Inneren des Motors reduziert wird.

Wie in FIG. 1 bis FIG. 3 gezeigt, ist das Entlüftungsventil 13 in der Entlüftungsöffnung 1h der Kastenabdeckung 12 montiert und kann dazu verwendet werden, ein ungehindertes Durchtreten von Luft zu ermöglichen, aber ein Durchtreten einer Flüssigkeit oder eines Festkörpers zu verhindern. Auf diese Weise kann durch Verwenden der Entlüftungsöffnung 1h und des Entlüftungsventils 13 der Luftdruck zwischen der inneren und äußeren Umgebung des Motors ausgeglichen werden und ein Eindringen von anderen Fremdkörpern kann ebenfalls verhindert werden.

In dieser Ausführungsform umfasst das Gehäuse 2, wie in FIG. 1 bis FIG. 3 gezeigt, einen Gehäusekörper 21 und eine Gehäuseabdeckung 22, die zusammengebaut sind. Der Gehäusekörper 21 weist eine zylindrische Form auf und die Gehäuseabdeckung 22 ist an einem axialen Seitenende des Gehäusekörpers 21 montiert und verschließt eine Öffnung an einer axialen Seite des Gehäusekörpers 21. Daher bilden der Gehäusekörper 21 und die Gehäuseabdeckung 22 auf eine geschlossene Weise einen Innenraum des Gehäuses 2 aus und der Großteil der Konstruktion von Stator 3 und Rotor 4 sind in dem Innenraum des Gehäuses 2 untergebracht.

Ferner ist der Gehäusekörper 21, wie in FIG. 2 und FIG. 3 gezeigt, mit einem Kühlkanal 2c versehen, der ein Fließen eines Kühlfluids (zum Beispiel Wasser), das den Stator 3 kühlt, ermöglicht. Der Kühlkanal 2c ist jedoch in der radialen Richtung des Motors von der Auffangrinne 1c versetzt angeordnet. Das heißt, der Kühlkanal 2c ist nicht in einem Abschnitt des Gehäusekörpers 21, der sich radial im Inneren der Auffangrinne 1c befindet, bereitgestellt. Auf diese Weise kann, wenn sich der Motor in einem Betriebszustand befindet, die von dem Stator 3 erzeugte Wärme leicht über den Gehäusekörper 21 zu dem Kondenswasser innerhalb der Auffangrinne 1c geführt werden, was die Verdampfung des Kondenswassers unter Erzeugen von abzuführendem Dampf erleichtert.

In dieser Ausführungsform umfasst der Stator 3, wie in FIG. 2 und FIG. 3 gezeigt, einen Eisenkern und eine Wicklung 31. Der Eisenkern kann durch Stapeln von Siliziumstahlblechen ausgebildet sein. Ein Leiter (zum Beispiel ein Flachdraht) der Wicklung 31 ist in den Eisenkern eingeführt und der Leiter der Wicklung 31 erstreckt sich zudem aus zwei Enden des Eisenkerns in einer axialen Richtung A.

In dieser Ausführungsform befindet sich der Rotor 4, wie in FIG. 1 bis FIG. 3 gezeigt, radial im Inneren des Stators 3 und weist einen bestimmten Luftspalt zu dem Stator 3 auf. Der Rotor 4 kann relativ zu dem Stator 3 rotieren, wodurch Drehmoment erzeugt wird.

In dieser Ausführungsform können beispielsweise drei der Vielzahl von Kabeln 5, wie in FIG. 1 bis FIG. 3 gezeigt, alle Kupferdrähte sein. Ein Ende jedes dieser Kabel 5 ist mit einem sich aus dem Eisenkern erstreckenden Abschnitt der Wicklung 31 verbunden, um eine elektrische Verbindung zu erreichen, und das andere Ende jedes dieser Kabel ist mit einer externen dreiphasigen (UVW) Stromversorgung verbunden, um eine elektrische Verbindung zu erreichen. Diese drei Kabel 5 dringen durch in dem Gehäusekörper 21 ausgebildete Durchgangslöcher ein, um in den Verteilerkasten 1 einzudringen. Die Durchgangslöcher in dem Gehäusekörper 21 ermöglichen außerdem, dass das Innere des Verteilerkastens 1 und das Innere des Gehäuses 2 miteinander in Verbindung stehen. Die drei Kabel 5 sind innerhalb des Verteilerkastens 1 zweimal rechtwinklig gebogen und durchdringen dann den ersten Seitenwandabschnitt 112 des Kastenkörpers 11, um sich aus dem Verteilerkasten 1 heraus zu erstrecken. Es versteht sich, dass die drei Kabel 5 gar nicht gebogen sein können oder nach Bedarf in einem beliebigen Winkel und beliebig oft gebogen sein können.

Es versteht sich, dass das Inneren des Verteilerkastens 1 auch eine oder mehrere einer Leiterplatte, eines Wechselrichters, einer Steuerung usw. aufnehmen kann, um die Leistungsaufnahme des Motors zu steuern.

In dieser Ausführungsform ist die Isolierplatte 6, wie in FIG. 2 und FIG. 3 gezeigt, aus einem Isoliermaterial hergestellt und die Isolierplatte 6 befindet sich zwischen einem Abschnitt des Kabels 5, der sich innerhalb des Verteilerkastens 1 befindet, und dem Gehäusekörper 21, was die elektrischen Isoliereigenschaften des Kabels 5 verbessern kann.

Durch Übernehmen der vorstehenden technischen Lösung kondensiert der Dampf innerhalb des Verteilerkastens 1 zu flüssigem Kondenswasser auf der Kastenabdeckung 12 mit einer relativ niedrigeren Temperatur, genauer gesagt, kondensiert er zu flüssigem Kondenswasser auf der Fläche der Rippe 123 der Kastenabdeckung 12. Wie vorstehend gezeigt, ist die Fläche der Rippe 123 mit einer hydrophilen Beschichtung versehen, die ein hydrophiles Material (zum Beispiel Polyurethan) enthält. Durch Ändern von chemischen Eigenschaften einer Fläche des Festkörpers weist die hydrophile Beschichtung Hydrophilie auf, wodurch eine gute Adhäsion und Benetzung der Flüssigkeit erreicht wird. Basierend auf der Einwirkung von Oberflächenspannung (die Oberflächenspannung ist eine Kraft gegenseitiger Anziehung zwischen Flüssigkeitsmolekülen) bewirkt die hydrophile Beschichtung, dass die Flüssigkeit bei Kontakt mit der Fläche des Festkörpers einen bestimmten Kontaktwinkel aufweist. Wenn der Kontaktwinkel zwischen der Flüssigkeit und der Fläche des Festkörpers kleiner als 90 Grad ist, neigt die Flüssigkeit dazu, vollständig an der Fläche des Festkörpers zu haften und diese zu benetzen. Auf diese Weise ist es weniger wahrscheinlich, dass das Kondenswasser große Tropfen auf den Flächen der Rippen 123 ausbildet, ist es weniger wahrscheinlich, dass es unter der Einwirkung der Schwerkraft herunterfällt, und ist es wahrscheinlicher, dass es an einer Fläche der hydrophilen Beschichtung adsorbiert wird, um abzufließen. Daher wird das Kondenswasser entlang des durch die Flächen der Rippen 123 definierten Strömungsleitwegs in die Auffangrinne 1c geleitet, wodurch die Möglichkeit von elektrischen Ausfällen aufgrund des an dem Verteilerkasten 1 kondensierten, auf das Kabel 5 tropfenden Kondenswassers stark reduziert oder sogar vermieden wird. Darüber hinaus erfordert der Verteilerkasten 1 der vorliegenden Anmeldung keine wesentliche Änderung einer Konstruktion eines bestehenden Verteilerkastens 1 und erreicht die vorstehend genannten Funktionen mit einer relativ einfachen konstruktiven Modifikation, wodurch die industrielle Produktion im Großmaßstab erleichtert wird.

Es versteht sich, dass die vorstehenden Ausführungsformen nur beispielhaft sind und die vorliegende Anmeldung nicht einschränken sollen. Fachleute können verschiedene Abwandlungen und Änderungen an den vorstehenden Ausführungsformen gemäß der Lehre der vorliegenden Anmeldung vornehmen, ohne von dem Schutzumfang der vorliegenden Anmeldung abzuweichen. Zusätzlich erfolgt eine ergänzende Erläuterung wie folgt.
i. In den vorstehenden Ausführungsformen können der Kastenkörper 11 des Verteilerkastens 1 und der Gehäusekörper 21 des Gehäuses 2 als eine Einheit ausgebildet sein; die vorliegende Anmeldung ist jedoch nicht darauf beschränkt. Der Verteilerkasten 1 kann unabhängig von dem Gehäuse 2 hergestellt sein und der unabhängig hergestellte Verteilerkasten 1 kann durch Schweißen, Löten oder andere Verbindungsverfahren an dem Gehäuse 2 befestigt sein.
   Es versteht sich, dass der Verteilerkasten 1 die Form eines Quaders oder Würfels aufweisen kann und schräg über einer Seite des Gehäuses 2 des Motors und in Umfangsrichtung des Motors bereitgestellt ist, sich die Auffangrinne 1c an einem unteren Ende des Verteilerkastens 1 befindet, was das Auffangen des Kondenswassers in der Auffangrinne 1c erleichtert.
ii. In den vorstehenden Ausführungsformen ist die Entlüftungsöffnung 1h in dem Oberteil 121 der Kastenabdeckung 12 ausgebildet, die vorliegende Anmeldung ist jedoch nicht darauf beschränkt. Die Entlüftungsöffnung 1h kann an dem zweiten Seitenwandabschnitt 122 der Kastenabdeckung 12 ausgebildet sein oder die Entlüftungsöffnung 1h kann sogar an dem Kastenkörper 11 ausgebildet sein. Es versteht sich, dass, die Entlüftungsöffnung 1h so nah wie möglich an der Öffnung der Auffangrinne 1c bereitgestellt sein kann, um zu ermöglichen, dass mindestens ein Teil des aus dem Kondenswasser in der Auffangrinne 1c verdampften Dampfes über die Entlüftungsöffnung 1h nach außen abgeführt wird.
iii. In den vorstehenden Ausführungsformen ist der Strömungsleitweg zum Leiten des Kondenswassers durch die Vielzahl von Rippen 123 definiert, indem die Vielzahl von Rippen 123 bereitgestellt wird, die vorliegende Anmeldung ist jedoch nicht darauf beschränkt. Es können auch andere Konstruktionen übernommen werden, um den vorstehenden Strömungsleitweg zu erreichen, solange das Kondenswasser reibungslos in die Auffangrinne 1c geleitet werden kann. Darüber hinaus muss der Strömungsleitweg nicht die Form einer geraden Linie aufweisen, sondern kann beispielsweise die Form einer Kurve, etwa eines Bogens, aufweisen.

Ferner versteht es sich, dass in dem Fall, dass sich der Strömungsleitweg linear erstreckt, um ein reibungsloses Leiten des Kondenswassers durch den Strömungsleitweg in die Auffangrinne 1c unter Einwirkung der Schwerkraft zu ermöglichen, der von dem Strömungsleitweg und der horizontalen Richtung ausgebildete spitze Winkel α in einer optionalen Lösung α ≥ 10° erfüllt.

### Liste der Bezugszeichen

- 1: Verteilerkasten;
- 1h: Entlüftungsöffnung;
- 1c: Auffangrinne;
- 11: Kastenkörper;
- 111: Boden;
- 112: Erster Seitenwandabschnitt;
- 113: Trennwandabschnitt;
- 12: Kastenabdeckung;
- 121: Oberteil;
- 122: Zweiter Seitenwandabschnitt;
- 123: Rippe;
- 13: Entlüftungsventil;
- 2: Gehäuse;
- 2c: Kühlkanal;
- 21: Gehäusekörper;
- 22: Gehäuseabdeckung;
- 3: Stator;
- 31: Wicklung;
- 4: Rotor;
- 5: Kabel;
- 6: Isolierplatte;
- S1: Erster Raum;
- S2: Zweiter Raum;
- A: Axiale Richtung.

## Patentansprüche

1. Verteilerkasten für einen Motor, wobei der Verteilerkasten mit einer Entlüftungsöffnung (1h) versehen ist, die ein Verbinden eines Inneren und Äußeren des Verteilerkastens (1) miteinander ermöglicht und wobei der Verteilerkasten (1) Folgendes umfasst:
einen an einem Gehäuse (2) des Motors befestigten und mit einer nach außen offenen Öffnung versehenen Kastenkörper (11) und wobei der Kastenkörper (11) mit einer Auffangrinne (1c) zum Auffangen von Kondenswasser versehen ist; und
eine an dem Kastenkörper (11) montierte und die Öffnung des Kastenkörpers (11) verschließende Kastenabdeckung (12), wobei die Kastenabdeckung (12) mit einem Strömungsleitweg versehen ist, wobei der Strömungsleitweg relativ zu einer horizontalen Richtung schräg angeordnet ist und ein unteres Ende des Strömungsleitwegs derart mit einer Öffnung der Auffangrinne (1c) in einer vertikalen Richtung ausgerichtet ist, dass das auf der Kastenabdeckung (12) kondensierte Kondenswasser durch den Strömungsleitweg geleitet werden kann und in die Auffangrinne (1c) fließt.

2. Verteilerkasten für einen Motor nach Anspruch 1, wobei die Kastenabdeckung (12) mit einer Vielzahl von Rippen (123) versehen ist, wobei sich die Vielzahl von Rippen (123) im Inneren des Verteilerkastens (1) befindet und jede Rippe (123) den entsprechenden Strömungsleitweg derart definiert, dass das auf einer Fläche jeder Rippe (123) kondensierte Kondenswasser durch die Rippe (123) geleitet werden kann und in die Auffangrinne (1c) fließt.

3. Verteilerkasten für einen Motor nach Anspruch 2, wobei sich jede der Rippen (123) linear erstreckt und die Vielzahl von Rippen (123) parallel zueinander verläuft und ein durch die Rippen (123) und die horizontale Richtung ausgebildeter spitzer Winkel α ist, wobei α ≥ 10° gilt.

4. Verteilerkasten für einen Motor nach Anspruch 2, wobei die Fläche jeder der Rippen (123) mit einer Beschichtung versehen ist, die ein hydrophiles Material enthält.

5. Verteilerkasten für einen Motor nach einem der Ansprüche 1 bis 4, wobei der Kastenkörper (11) mit einem Boden (111), einem ersten Seitenwandabschnitt (112) und einem Trennwandabschnitt (113) versehen ist, wobei der erste Seitenwandabschnitt (112) von dem Boden (111) absteht und zusammen mit dem Boden (111) einen ersten Raum (S1) definiert und der Trennwandabschnitt (113) von dem Boden (111) absteht und den ersten Raum (S1) in die Auffangrinne (1c) und einen Kabelraum zum Aufbewahren eines Kabels (5) unterteilt.

6. Verteilerkasten für einen Motor nach Anspruch 5, wobei die Kastenabdeckung (12) mit einem Oberteil (121) und einem zweiten Seitenwandabschnitt (122) versehen ist, wobei der zweite Seitenwandabschnitt (122) von dem Oberteil (121) absteht und zusammen mit dem Oberteil (121) einen zweiten Raum (S2) definiert, wobei sich die Entlüftungsöffnung (1h) an dem Oberteil (121) befindet und durch das Oberteil (121) dringt und die Kastenabdeckung (12) auf eine Weise an dem Kastenkörper (11) montiert ist, dass der zweite Seitenwandabschnitt (122) mit dem ersten Seitenwandabschnitt (112) ausgerichtet ist.

7. Verteilerkasten für einen Motor nach Anspruch 6, wobei eine in Richtung des zweiten Raums (S2) offene Öffnung der Entlüftungsöffnung (1h) derart mit der Öffnung der Auffangrinne (1c) ausgerichtet, dass nach dem Verdampfen des Kondenswassers in der Auffangrinne (1c) erzeugter Dampf mindestens teilweise über das Entlüftungsloch (1h) abgeführt werden kann.

8. Motor, umfassend den Verteilerkasten (1) für einen Motor nach einem der Ansprüche 1 bis 7.

9. Motor nach Anspruch 8, wobei der Motor ein Gehäuse (2) umfasst, wobei der Verteilerkasten (1) für den Motor die Form eines Quaders oder Würfels aufweist und schräg über einer Seite des Gehäuses (2) des Motors und in Umfangsrichtung des Motors bereitgestellt ist, wobei sich die Auffangrinne (1c) an einem unteren Ende des Verteilerkastens (1) befindet.

10. Motor nach Anspruch 9, ferner umfassend einen Stator (3), einen Rotor (4) und das Kabel (5), wobei der Verteilerkasten (1) an dem Gehäuse (2) befestigt ist, das Kabel (5) mit einer Wicklung (31) des Stators (3) verbunden ist und das Gehäuse (2) durchdringt, um sich in den Verteilerkasten (1) hinein zu erstrecken, wobei ein Abschnitt des sich in den Verteilerkasten (1) erstreckenden Kabels (5) von der Auffangrinne (1c) getrennt ist,
das Gehäuse (2) als Boden (111) des Kastenkörpers (11) dient und ein Inneres des Gehäuses (2) mit einem Kühlkanal (2c) zum Strömen eines Kühlfluids darin zum Kühlen des Stators (3) versehen ist und der Kühlkanal (2c) in einer radialen Richtung des Motors von der Auffangrinne (1c) versetzt angeordnet ist.
